# EUROPEAN PATENT APPLICATION

(11) **EP 0 588 039 A1**
(43) Date of publication of application: **23.03.1994**
(21) Application number: 93112320.2
(22) Date of filing: 31.07.1993
(51) Int. Cl.: H04J 14/02, H04J 14/06, G02B 6/36, G02B 6/34, G02B 27/28, H04B 10/22, H01P 1/06

(54) **Improvements in or relating to rotatable joints for communication lines**

(30) Priority: 12.09.1992 GB 9219351
(71) Applicant: ROKE MANOR RESEARCH LIMITED, Romsey, Hampshire, SO51 0ZN (GB)
(72) Inventor: Wilton, Paul Miles, Eastleigh, Hants SO5 5HZ (GB)
(74) Representative: Allen, Derek

(57) **Abstract**

A system of communication across a rotatable joint comprising discriminating between channels (1-4) by means of a combination of wavelength division multiplexing (λ₁,λ₂) and optical polarization multiplexing using phase compensated quarter wave plates (25,28,25',28'), or alternatively achromatic quarter wave plates (37,37') to effect conversion of respective orthogonally polarized signals to circularly polarized signals, which circularly polarized signals are arranged to traverse a boundary (29) between relatively rotatable parts and using similar plates to effect re-conversion of the respective circularly polarized signals back to orthogonally polarized signals.

## Description

This invention relates to rotatable joints for communication lines.

Such joints are the subject of our GB patent application 2250652A by Dr G M S Joynes to which attention is hereby directed. Our co-pending patent application, as just before referred to, is concerned more particularly with a two-channel system in which multiplexing is effected by means of an optical polarization system. However, it is envisaged that for some applications more than two channels may be required. As suggested in our co-pending application, a plurality of channels may be provided using frequency multiplexed sources, but this is not easy in practice since polarizing beam splitters and the usual quarter wave plates which are required, tend to be wavelength sensitive and can, therefore, introduce cross talk between channels. Moreover, filters for wavelength division multiplexing can also introduce phase delays which have a similar undesirable effect.

It is an object of the present invention to provide for the communication across a rotatable joint in a multiplicity of discreet channels with little or no cross-channel interference.

According to the present invention as broadly conceived, a system of communication across a rotatable joint comprises discriminating between channels by means of a combination of wavelength division multiplexing and optical polarization multiplexing using phase compensated quarter wave plates, or alternatively achromatic quarter wave plates to effect conversion of respective orthogonally polarized signals to circularly polarized signals, which circularly polarized signals are arranged to traverse a boundary between relatively rotatable parts and using similar plates to effect re-conversion of the respective circularly polarized signals back to orthogonally polarized signals.

The channels may be transmitted in pairs, the channels of each pair being transmitted across the said boundary using light at substantially the same wavelength, channel discrimination being effected by using polarized phase quadrature related signals for the respective channels of each pair, each pair being transmitted across the boundary at a different wavelength.

In one embodiment of the invention two pairs of orthogonally polarized channels signals may be fed through a wavelength division multiplexer so that output signals are produced in which each pair of channels is distinguished from the other by wavelength, signals produced by the wavelength division multiplexer being fed via an achromatic quarter wave plate to produce circularly polarized signals which are arranged to traverse the said boundary, thereafter to be re-converted via another achromatic quarter wave plate and wavelength division multiplexer to orthogonally polarized signals.

By using an achromatic quarter wave plate, the use of different wavelengths for each pair of channels produces no corresponding differential phase shifts which could potentially cause problems, and moreover by effecting the wavelength division multiplexing operation before conversion to circular polarization by means of the quarter wave plates, phase distortion which might otherwise be caused by the multiplexer is avoided.

In an alternative embodiment of the invention, each pair of channel signals is fed to the wavelength division multiplexer via a phase compensated quarter wave plate, the degree of compensation being chosen in accordance with the wavelength of light to be used.

In this alternative embodiment, by the expedient of phase tweeking, using techniques as known to those skilled in the art, to produce phase compensated quarter wave plates, phase distortion which might otherwise be a problem is compensated for.

Some exemplary embodiments of the invention will now be described by way of example only with reference to the accompanying drawings in which;
Fig. 1 is a somewhat schematic side view of a rotatable joint for an optical transmission line as described in our GB Patent Application 2250652A;
Fig. 2 is a generally schematic block diagram showing the principal parts of a rotatable joint for an optical transmission line in accordance with one embodiment of the invention; and,
Fig. 3 is a generally schematic block diagram of the principal parts of a rotatable joint for an optical transmission line in accordance in an alternative aspect of the present invention.

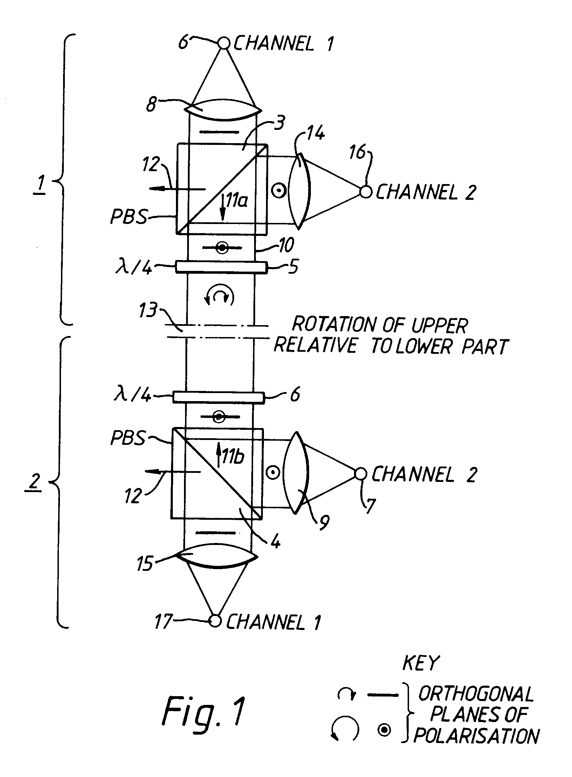

Referring now to Fig. 1 the joint for an optical joint transmission line comprises two parts, 1 and 2 which are arranged for relative rotation.

In this particular example the joint is used in an optical transmission line of a rotatable radar antenna array and thus the part 2 will generally be stationary, whilst the part 1 will be constrained to rotate with respect to it by means of a motor not shown. The parts 1 and 2 are generally similar in construction and comprise optical polarizing beam splitters 3 and 4 respectively, the polarizing beam splitter 3 being operatively associated with a quarter wave plate 5 whilst the polarizing beam splitter 4 is operatively associated with a quarter wave plate 6. The parts 1 and 2 of the joint include two lasers 6 and 7 which are arranged to produce polarised optical signals one for each of two channels. In the present example the laser 6 is arranged to produce horizontally polarized light and the laser 7 is arranged to produce vertically polarized light. Light from the lasers 6 and 7 are fed via lenses 8 and 9 respectively to the polarising beam splitters 3 and 4 such that the channel signals are directed through a light pipe 10 in opposite directions as indicated by the arrows 11a and 11b. Although the light sources 6 and 7 in the present example are lasers, it will be apparent that the polarising beam splitters 3 and 4 serve to produce polarized light in one channel which is orthogonally related to light in the other channel and thus the sources 6 and 7 may, in an alternative embodiment be LEDs, or other non-polarized light sources, but in these circumstances there will be an inevitable light loss and light from both sources will be dumped in a direction as indicated by arrows 12.

Optical channel signals having a mutually orthogonally polarized relationship are fed from the polarizing beam splitters 3 and 4 to the quarter wave plates 5 and 6 thereby to produce corresponding circularly polarized channel signals of opposite rotational sense which travel in opposite directions. Thus one signal channel will be polarised circularly in a right hand sense and the other signal channel will be polarized circularly in a left hand sense (or vice versa). The circularly polarized channel signals will traverse an interface 13 between the two parts 1 and 2 and although in the present embodiment the interface is simply an air space, in alternative embodiments the quarter wave plates 5 and 6 may actually be arranged in lubricated contact with each other whereby the quarter wave plate 5 will rotate in contact with the quarter wave plate 6. Another alternative would involve the coupling of parts 1 and 2 by means of a waveguide, in which case the waveguide must be able to support the two orthogonal polarizations without interference occurring.

Circularly polarized light thus passes across the interface 13 to be converted by the quarter wave plates 5 and 6 back to signal channels having mutually orthogonal polarization characteristics such as horizontal and vertical polarization for example. These signals are fed from the quarter wave plates 5 and 6 to the polarizing beam splitters 3 and 4 to produce output channel signals which are focused by lenses 14 and 15 respectively onto optical detectors 16 and 17 respectively whereby output channel signals are produced for each channel which correspond to the input channel signals generated at the light sources 6 and 7.

The arrangement described affords two channels suitable for duplex communication, the channels being transmitted in opposite directions. In an alternative arrangement however, two communication channels may be provided in one direction such that two signal transmitters are associated with one part of the joint and two signal receivers are associated with the other part.

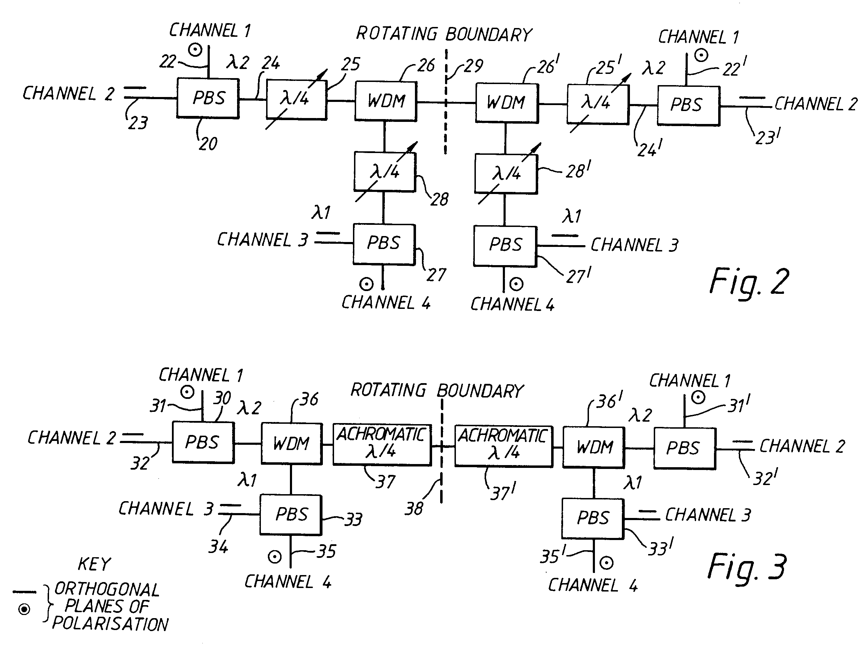

Although the arrangement thus far described is eminently suitable for two-channel duplex communication, it is contemplated that for some applications more than two channels are required, and arrangements for providing more than two channels will now be considered with reference to Figs 2 and 3. Referring now to Fig. 2, one possible arrangement comprises a polarizing beam splitter 20 which is fed via lines 22 and 23 with optical signals for channels 1 and 2 respectively. The polarizing beam splitter 20 provides an output signal on line 24, wherein the signals for channel 1 and 2 comprise polarized phase quadrature related optical signals. For example, one channel may comprise horizontally polarized signals and the other channel may comprise vertically polarized signals. The signals on the line 24 are fed via a phase compensated quarter wave plate 25 to a wavelength division multiplexer 26. The wavelength division multiplexer 26 is also fed with signals appertaining to two further channels 3 and 4 which are produced in a similar manner by a polarizing beam splitter 27 and a compensated quarter wave plate 28. The quarter wave plates 25 and 28 serve to transpose the orthogonally related signals of channel 1 and channel 2 and the orthogonally related signals of channel 3 and channel 4 to circularly polarized signals, whilst the wavelength division multiplexer 26 serves to convert the circularly polarized signals to different wavelengths whereby channels 1 and 2 are transmitted across a rotating boundary 29 at one wavelength, whereas the circularly polarized signals representing channel 3 and channel 4 are transmitted across the boundary 29 at a different wavelength. Similar apparatus is provided on the other side of the rotating boundary 29, (which where appropriate bears the same numerical designations distinguished by a dash suffix). It will be appreciated that with the arrangement, as just before described with reference to Fig. 2, channel 1 and channel 2 represent one pair of channels, wherein channels of the pair are distinguished from each other during transmission by polarization and that the channels 3 and 4 represent another pair of channels similarly distinguished from each other by polarization, but distinguished from the channels 1 and 2 by wavelength. It will also be appreciated that the quarter wave plates 25, 25', 28, 28' are adapted to be pre-compensated so that the correct phase relationship obtains at the wavelength selected in each case. It will also be appreciated that in view of this requirement the quarter wave plates 25 and 25' will require differing degrees of compensation from the quarter wave plates 28 and 28'.

In order to avoid this complexity an improved arrangement as described in Fig. 3 may be provided. Referring now to Fig. 3 the arrangement comprises a polarizing beam splitter 30 which is fed with channel 1 and channel 2 information via lines 31 and 32 respectively. Similarly, a polarizing beam splitter 33 is provided which is fed with channel information for channel 3 and channel 4 via lines 34 and 35 respectively. The polarizing beam splitters 30 and 33 are arranged to feed a wavelength division multiplexer 36 which combines signals relating to channel 3 and channel 4 at one wavelength and signals relating to channel 1 and channel 2 at a different wavelength. At this point the channels 1 and 2 are phase quadrature related and the channels 3 and 4 are also phase quadrature related. The phase quadrature related signals are fed to an achromatic quarter wave plate 37 which converts the signals to circular polarization for transmission across a rotating boundary 38. On the other side of the boundary similar apparatus is provided, (which bears for convenience the same numerical designations distinguished by a dash suffix). By the expedient of using an achromatic quarter wave plate, the different wavelengths required for each pair of channels produces no corresponding differential phase shifts which could potentially cause interchannel interference and by effecting the wavelength division multiplexing operation before conversion to circular polarization, phase distortion which might otherwise be caused by the wavelength division multiplexer is avoided.

Various modifications may be made to the arrangement shown without departing from the scope of the invention, and for example, a plurality of pairs of channels may be provided wherein each pair is arranged to use a different wavelength for transmission across the rotating boundary.

## Claims

1. A system of communication across a rotatable joint comprising discriminating between channels by means of a combination of wavelength division multiplexing and optical polarization multiplexing using phase compensated quarter wave plates, or alternatively achromatic quarter wave plates to effect conversion of respective orthogonally polarized signals to circularly polarized signals, which circularly polarized signals are arranged to traverse a boundary between relatively rotatable parts and using similar plates to effect re-conversion of the respective circularly polarized signals back to orthogonally polarized signals.

2. A system as claimed in Claim 1 wherein the channels are transmitted in pairs, the channels of each pair being transmitted across the said boundary using light at substantially the same wavelength, channel discrimination being effected by using polarized phase quadrature related signals for the respective channels of each pair, each pair being transmitted across the boundary at a different wavelength.

3. A system as claimed in Claim 2 wherein two pairs of orthogonally polarized channels signals are fed through a wavelength division multiplexer so that output signals are produced in which each pair of channels is distinguished from the other by wavelength, signals produced by the wavelength division multiplexer being fed via an achromatic quarter wave plate to produce circularly polarized signals which are arranged to traverse the said boundary, thereafter to be re-converted via another achromatic quarter wave plate and wavelength division multiplexer to orthogonally polarized signals.

4. A system as claimed in Claim 2, wherein each pair of channel signals is fed to the wavelength division multiplexer via a phase compensated quarter wave plate, the degree of compensation being chosen in accordance with the wavelength of light to be used.
